# EUROPEAN PATENT SPECIFICATION

(11) **EP 2 454 003 B1**
(45) Date of publication and mention of the grant of the patent: **06.01.2016**
(21) Application number: 10800112.4
(22) Date of filing: 18.06.2010
(51) Int. Cl.: B01D 45/14, B04B 5/08

(54) **A CENTRIFUGAL SEPARATOR**
ZENTRIFUGALABSCHEIDER
SÉPARATEUR CENTRIFUGE

(30) Priority: 13.07.2009 SE 0950554
(43) Date of publication of application: 23.05.2012
(73) Proprietor: Alfa Laval Corporate AB, 221 00 Lund (SE)
(72) Inventor: ELIASSON, Thomas, S-12540 Älvsjö (SE)
(74) Representative: Alfa Laval Attorneys
(86) International application number: PCT/SE2010/050690
(87) International publication number: WO 2011/008156

(56) References cited:
- WO-A1-00/10714
- WO-A1-2005/044462
- WO-A1-2007/001232
- US-B2- 7 022 163
- US-B2- 7 022 163
- US-B2- 7 465 341

## Description

### BACKGROUND OF THE INVENTION AND STATE OF THE ART

The present invention relates to a centrifugal separator for removal of particulate contaminants from a gas, which centrifugal separator comprises a housing which delimits a separation chamber and which has a gas inlet to the separation chamber and a gas outlet from the separation chamber. Within the housing, a rotor is rotatable around a rotational axis in the separation chamber. The rotor comprises a stack of truncated conical separation discs arranged at mutual spacing such that they delimit between them intermediate spaces for the gas to flow through. An inlet shaft is disposed centrally in the stack of separation discs, which inlet shaft communicates with the gas inlet and the intermediate spaces between the separation discs and is adapted to leading the gas radially outwards through the intermediate spaces between the separation discs. An annular space of the separation chamber surrounds the rotor, is delimited radially by the housing and communicates with the intermediate spaces between the separation discs and with the gas outlet.

SE 524 140 C2 refers to such a centrifugal separator in which the gas flowing into the inlet shaft has no substantial rotational motion. Only in the narrow intermediate spaces between the separation discs is the gas caused to rotate in the direction of rotation of the rotor, whereby the particles are separated from the gas by the centrifugal force which arises in the rotating gas.

SE 515 302 C2 refers to a similar centrifugal separator. Instead of a central inlet shaft, the rotor in this case has a central inlet space defined between planar portions of the separation discs, which planar portions are provided with holes running through them for the gas which flows into the inlet space. Another known practice is to provide such a centrifugal separator with separation discs which comprise a hub with spokes instead of the planar portion provided with holes.

However, the planar portions or the spokes may hinder the flow axially through the inlet space (i.e. may cause disturbance of inflow in the inlet space), resulting in an axial pressure gradient in the inlet space which may cause an uneven distribution of the gas to the intermediate spaces in the stack of separation discs.

US 7 022 163 B2 discloses a centrifugal separator according to the preamble of claim 1.

To achieve effective separation, the contaminated gas needs to be distributed evenly between all of the intermediate spaces in said stack of separation discs. Uneven distribution of the gas results in certain intermediate spaces receiving a surplus of the gas while other intermediate spaces receive a deficit or none of the gas. Thus not all of the separation discs in the stack are utilized to the extent intended for achieving good separating results.

### SUMMARY OF THE INVENTION

An object of the present invention is to reduce the above problem and propose a centrifugal separator with improved separating performance.

According to the present invention this is achieved by the centrifugal separator described in the introduction which comprises a body which is arranged within the inlet shaft, the body being connected to the rotor and comprising entrainment means for bringing the gas within the inlet shaft in the direction of rotation of the rotor.

Said entrainment means result in improved separating performance because the gas leaving the inlet shaft, i.e. the gas flowing into the intermediate spaces, will already be rotating with the rotor, thereby utilizing the centrifugal force early in the radially inner portions of the intermediate spaces between the separation discs. A further result is more even distribution of the gas in the stack of separation discs. An inlet shaft presents substantially no obstacles to the flow of the gas, so the gas can flow relatively freely through the whole axial extent of the inlet shaft. Said entrainment means cause the gas in the radially outer portions of the inlet shaft to have a higher rotation speed and hence a higher pressure than the gas in the radially inner portions of the inlet shaft, resulting in the gas flowing into the inlet shaft being forced in at a smaller radius in the inlet shaft. In these inner portions of the inlet shaft, i.e. at the smaller radius, there is axial distribution of the gas along substantially the whole inlet shaft before it flows radially outwards towards the intermediate spaces between the separation discs.

According to an embodiment of the invention, the body comprises a tubular wall which radially surrounds the inlet shaft and said entrainment means and which has running through it a plurality of apertures through which the inlet shaft communicates with the intermediate spaces between the separation discs. Thus the tubular wall also forces the gas flowing into the inlet shaft in at a smaller radius in the inlet shaft and improves the entrainment of the gas before it flows into the intermediate spaces between the separation discs. In this context the apertures may be dimensioned, in number, shape and size, to optimise and thereby further improve the distribution of the gas to the intermediate spaces between the separation discs.

According to a further embodiment of the invention, the number and size of said apertures are such that they together take up at least a major part of the surface of the tubular wall. This enables the inlet shaft to communicate with the intermediate spaces between the separation discs without much flow pressure drop, i.e. the gas can flow relatively easily through such a tubular wall which has many large apertures running through it.

According to another embodiment of the invention, each separation disc comprises a radially inner edge with at least one recess and the tubular wall comprises at least one elongate rib extending radially outwards from and axially along the outside of the tubular wall and adapted to engaging in the recess to provide polar guidance for the separation discs relative to the tubular wall. This makes it easy for the separation discs to be stacked around the tubular wall.

According to a further embodiment of the invention, the tubular wall and the stack of separation discs form between them a transfer shaft for gas, which transfer shaft surrounds and extends axially along the tubular wall, whereby the inlet shaft communicates with the intermediate spaces between the separation discs via said transfer shaft. The transfer shaft thus constitutes a hollow space which allows further axial distribution of the gas flowing out through the apertures of the tubular wall before it flows into the intermediate spaces between the separation discs.

According to a further embodiment of the invention, the body's tubular wall and entrainment means are integral. This would facilitate the manufacture of the device. The stack of truncated conical separation discs may also be arranged axially between an upper end disc and a lower end disc, wherein the body may be made integral with one of said end discs. The body may also comprise a bushing adapted to surrounding a spindle which supports the rotor, wherein said entrainment means extend radially between the bushing and the tubular wall, which bushing is connected to the tubular wall integrally by said entrainment means.

According to another embodiment of the invention, said entrainment means comprise a number of wings distributed around the rotational axis and extending radially and axially in the inlet shaft. This results in a substantially clear axial flow passage for the gas and at the same time effective entrainment of the gas. The number of wings arranged in the inlet shaft ranges from one to ten, preferably two to five, and still more preferably three.

According to a further embodiment of the invention, said entrainment means comprise a disc element extending axially within the inlet shaft in a helical path around the rotational axis. Thus the helical shape can itself put the gas into rotation, with no need for the rotor to rotate at a higher speed.

### BRIEF DESCRIPTION OF THE DRAWINGS

The present invention is explained below in more detail on the basis of embodiments described by way of examples with reference to the attached drawings.
- Fig. 1: shows a cross-sectional view of a centrifugal separator according to a first embodiment of the invention.
- Fig. 2: shows in perspective a body arranged in the centrifugal separator according to the first embodiment according to Fig. 1.
- Fig. 3: shows a cross-sectional view of a centrifugal separator according to a second embodiment of the invention.

### DETAILED DESCRIPTION OF VARIOUS EMBODIMENTS OF THE INVENTION

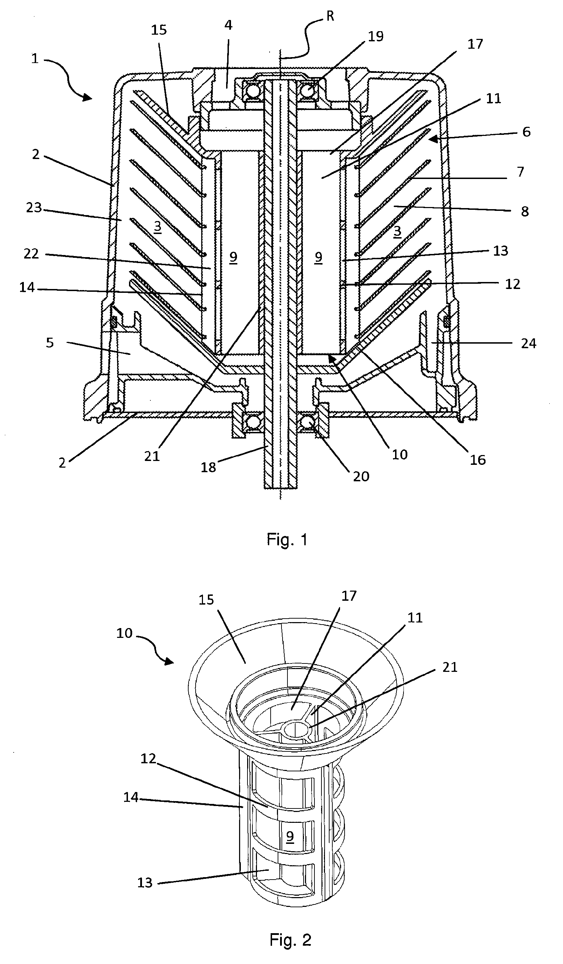

Fig. 1 shows a centrifugal separator 1 according to a first embodiment of the invention, which centrifugal separator 1 is adapted to separating particulate contaminants from a gas, preferably crankcase gas from a combustion engine. The particles may be solid and/or liquid, e.g. soot and oil particles in crankcase gas. The centrifugal separator 1 comprises a stationary housing 2 which delimits a separation chamber 3 and which has a gas inlet 4 to the separation chamber 3 and a gas outlet 5 from the separation chamber 3. Ducts (not shown) are respectively connected to the gas inlet 4 and the gas outlet 5 to respectively supply and carry away the gas which flows through the centrifugal separator.

Within the stationary housing 2, a rotor 6 is arranged for rotation around a rotational axis R in the separation chamber 3. The rotor 6 comprises a stack of truncated conical separation discs 7 arranged at mutual spacing such that they delimit between them intermediate spaces 8 for the gas to flow through. An inlet shaft 9 which is disposed centrally in the stack of separation discs 7, communicates with the gas inlet 4 and the intermediate spaces 8 between the separation discs 7 and is adapted to leading the gas radially outwards through the intermediate spaces 8 between the separation discs 7. The centrifugal separator 1 is thus adapted to so-called concurrent flow separation.

Within the inlet shaft 9 there is a body 10 (see also Fig. 2) which comprises entrainment means for entraining the gas within the inlet shaft 9 in the direction of rotation of the rotor. The body 10 comprises entrainment means in the form of three elongate disc elements, so-called wings 11, distributed around the rotational axis R and extending radially and axially in the inlet shaft 9. The body further comprises a tubular wall 12 radially surrounding the inlet shaft 9 and said wings 11. The tubular wall 12 has running through it a plurality of apertures 13 through which the inlet shaft 9 communicates with the intermediate spaces 8 between the separation discs 7. The embodiment shows a total of nine apertures 13 of rectangular shape distributed in rows axially along the tubular wall 12 and between the wings 11. Each row thus consists of three apertures disposed between mutually adjacent wings 11. The size of the rectangular apertures 13 is such that they together take up a major portion of the surface of the tubular wall.

The tubular wall 12 comprises three elongate protrusions in the form of three ribs 14 extending radially outwards from and axially along the outside of the tubular wall. These ribs 14 are disposed between said rows of apertures 13 and are situated radially outside and in line with the wings 11. Each separation disc 7 comprises a radially inner edge with three recesses (not shown in the drawings), whereby the ribs 14 are adapted to engaging in the recesses to provide polar guidance for the separation discs 7 relative to the tubular wall 12. The conical separation discs 7 are stacked between an upper end disc 15 and a lower end disc 16 which are similar in shape to the separation discs 7. The end discs 15 and 16 are thicker and more rigid than the separation discs 7, and the stack of separation discs 7 is pressed together between the end discs 15 and 16. The upper end disc 15 is provided with a central hole 17 through which the gas inlet 4 communicates with the inlet shaft 9 in the rotor. The inlet shaft 9 is delimited axially by the lower end disc 16.

The rotor 6 is journalled via a spindle 18 in an upper bearing unit 19 and a lower bearing unit 20 which are arranged in the stationary housing 2 on their respective sides of the stack of separation discs 7. The spindle 18 extends coaxially with the rotational axis R and through the rotor 6, and a lower end portion of the spindle 18 may be connected to a drive device (not shown), e.g. an electric motor or a turbine for driving by means of pressure fluid. The body 10 comprises a bushing 21 adapted to surrounding the portion of the spindle 18 which extends through the inlet shaft 9. The body's wings 11 extend radially between the bushing 21 and the tubular wall 12, dividing the inlet shaft 9 into sectors delimited in the circumferential direction by the wings 11. The whole body 10 constitutes an integrated unit such that the bushing 21 is connected to the tubular wall 12 integrally by the wings 11. According to this embodiment, the body 10 is also integrated with the upper end disc 15. Thus the tubular wall 12 with the wings 11 and the bushing 21 is integral with the upper end disc 15. This makes it easy for the separation discs 7 to be stacked on the upper end disc 15 with the integrated body 10. A transfer shaft 22 surrounding and extending axially along the tubular wall 12 is formed between the tubular wall 12 and the stack of separation discs 7. The inlet shaft 9 thus communicates with the intermediate spaces 8 between the separation discs 7 via said transfer shaft 22. The transfer shaft 22 makes further axial distribution of the gas possible before it flows into the intermediate spaces 8 between the separation discs. In the circumferential direction the transfer shaft 22 is delimited by said ribs 14 and is thereby divided into sectors similar to the division of the inlet shaft 9 into sectors by the wings 11.

An annular space 23 of the separation chamber 3 surrounds the rotor 6, is delimited radially by the stationary housing 2 and communicates with the intermediate spaces 8 between the separation discs and with the gas outlet 5. Within the stationary housing 2 in the lower portion of the separation chamber 3, an annular collection groove 24 is provided for the particles separated from the gas. The collection groove 24 communicates with a particle outlet (not shown) for removal from the stationary housing 2 of the solid and liquid contaminants separated from the gas.

The embodiment shown in Figs. 1 and 2 comprises a body 10 with straight wings 11 (or disc elements), i.e. wings 11 which extend straight in both radial and axial directions through the inlet shaft 9, but it should be noted that the wings (or the disc elements) may extend at angles or along a curved path in a radial direction. The wings 11 (or the disc elements) may also extend axially in a helical path around the rotational axis R.

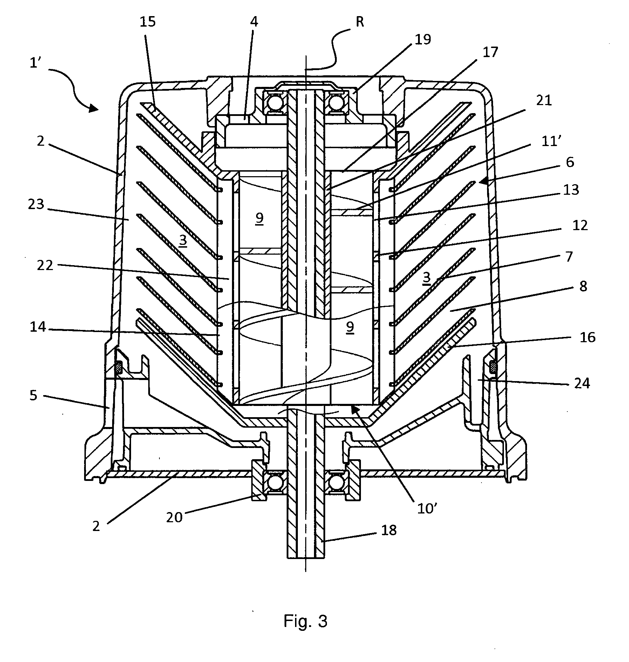

Fig. 3 shows a second embodiment of a centrifugal separator 1' in which the body 10' comprises an entrainment means in the form of a disc element 11' which extends axially within the inlet shaft 9 in a helical path around the rotational axis R. The disc element 11' also extends radially between the bushing 21 and the tubular wall 12. The disc element 11' thus forms a helical inlet shaft 9 surrounded by the tubular wall 12 with the apertures 13 running through it. The body 10' with the helical disc element 11' is connected to the rotor whereby the helical disc element 11' pumps the gas axially downwards in the inlet shaft when the rotor 6 rotates (i.e. during operation of the centrifugal separator). As in the first embodiment, this body 10' takes the form of an integrated unit such that the bushing 21 is integral with the tubular wall 12 via the helical disc element 11'. The body 10' is also integrated with the upper end disc 15. Thus the tubular wall 12 with the disc element 11' and the bushing 21 are integral with the upper end disc 15. The configuration of the centrifugal separator 1' is otherwise the same as in the previously described first embodiment. It should be noted that parts which have the same function have been given the same reference signs.

It should be noted that neither the wings 11 nor the helical disc element 11' need extend radially all the way to the rotational axis R or the aforesaid bushing 21. Thus the wings or the disc element may extend through a radially outer portion of the inlet shaft, thereby forming in a radially inner portion of the inlet shaft a hollow space without entrainment means. It should also be noted that said entrainment means may comprise a stack of annular disc elements (or washers) arranged coaxially with the rotational axis within the inlet shaft and at mutual spacing such that they delimit between them intermediate spaces for entrainment and throughflow of the gas. Such annular disc elements (or washers) have with advantage a radial extent through only the radially outer portion of the inlet shaft, thereby forming in the radially inner portion of the inlet shaft a hollow space for clear axial throughflow of gas.

The centrifugal separators described above and shown in the drawings operate in the following manner when cleaning a gas from particles suspended therein (which are of greater density than the gas). The rotor 6 is kept rotating by a drive device (not shown). Gas contaminated with particles is led into the stationary housing 2 from above through the gas inlet 4. From there, the gas flows down in the inlet shaft 9. The inlet shaft 9 presents substantially no obstacles to gas flow, so the gas can flow relatively freely through the axial extent of the whole inlet shaft. In the inlet shaft, the gas is caused to rotate by said entrainment means in the form of the wings 11 or the helical disc element 11'. The entrained gas thus rotates at substantially the same speed as the rotor. The gas in the radially outer portions of the inlet shaft 9 will be at a higher tangential velocity and hence a higher pressure than the gas in the radially inner portions of the inlet shaft 9, thereby forcing the gas flowing into the inlet shaft 9 in at a smaller radius in the inlet shaft 9. In these inner portions of the inlet shaft, i.e. at the smaller radius, the result is axial distribution of the gas along substantially the whole of the inlet shaft before it flows radially outwards towards the intermediate spaces 8 between the separation discs 7. The helical disc element 11' may also help to pump the gas down axially in the inlet shaft. The tubular wall 12 also helps to further force the gas in at the smaller radius in the inlet shaft 9. The entrainment of the gas before it flows into the intermediate spaces 8 between the separation discs 7 is thus also improved.

The gas flows radially outwards through the apertures 13 in the tubular wall 12, whereupon the gas passes through the transfer shaft 22. The transfer shaft 22 has a radial extent between the tubular wall 12 and the stack of separation discs 7 and surrounds and extends axially along the tubular wall 12. The transfer shaft 22 thus constitutes a hollow space which allows further axial distribution of the gas flowing out through the apertures 13 in the tubular wall before it flows into the intermediate spaces between the separation discs. As illustrated in Figs. 1 and 3, said transfer shaft 22 is delimited in the circumferential direction by the ribs 14 which provide the separation discs with polar guidance. The ribs thus define a transfer shaft 22 in sectors similar to how the wings 11 divide the inlet shaft 9. However, the main function of the transfer shaft 22 is axial distribution of the gas, during which these ribs 14 present no obstacles to gas flow.

The gas flowing through the intermediate spaces 8 will be entrained in the direction of rotation of the rotor by the separation discs 7. The centrifugal force which arises in the rotating gas forces the suspended particles to move towards and come into contact with the insides of the separation discs, i.e. the sides of the separation discs which face upwards in Figs. 1 and 3. Upon contact with the separation discs 7, the particles will by centrifugal force slide or run radially outwards along said insides and will then be thrown towards the inner wall of the stationary housing 2. The particulate contaminants run down the inner wall into the annular collection groove 24 and out through the particle outlet (not shown). The cleaned gas which in each intermediate space between mutually adjacent separation discs has been cleared of particles flows through the annular space 23 of the separation chamber 3 surrounding the rotor 6, and leaves the separation chamber 3 through the gas outlet 5.

The centrifugal separator described and shown has great separating efficiency and can be manufactured very inexpensively by appropriate choice of materials for the various parts. Thus the majority of the parts may be made of plastic. Apart from screws and bearings, only the central spindle should with advantage be made of metal. As already mentioned, one of the end discs and the various parts of the body 10 may be made integrally, advantageously of plastic. The various parts of the body 10 may either be moulded integrally or be mutually assembled by means of suitable fastening means to form a unit.

The invention is not limited to the embodiments referred to but may be varied and modified within the scope of the claims set out below.

For example, the invention is not limited to cleaning of crankcase gas but may be used to separate particulate contaminants from any other desired gas. The size, shape and number of the apertures 13, as also the diameter of the tubular wall 12, may be adapted and optimised to suit different conditions. For polar guidance of the separation discs it is for example possible to use rods extending axially through the stack, in which case the separation discs will be provided with corresponding holes adapted to the rods. Instead of the spindle 18 extending through the inlet shaft 9 the rotor may be provided with end spigots for its journalling at either or both of its axial ends.

## Claims

1. A centrifugal separator (1) for removing particulate contaminants from a gas, which centrifugal separator (1) comprises
- a housing (2) which delimits a separation chamber (3) and has a gas inlet (4) to the separation chamber (3) and a gas outlet (5) from the separation chamber (3),
- a rotor (6) which is rotatable around a rotational axis (R) in the separation chamber (3) and comprises a stack of truncated conical separation discs (7) arranged at mutual spacing such that they delimit between them intermediate spaces (8) for the gas to flow through,
- an inlet shaft (9) which is disposed centrally in the stack of separation discs (7), which inlet shaft (9) communicates with the gas inlet (4) and the intermediate spaces (8) between the separation discs (7) and is adapted to leading the gas radially outwards through the intermediate spaces (8) between the separation discs (7), and
- an annular space (23) of the separation chamber (3), which surrounds the rotor (6), is delimited radially by the housing (2) and communicates with the intermediate spaces (8) between the separation discs (7) and with the gas outlet (5),
**characterized by**
- a body (10) which is arranged within the inlet shaft (9), the body being connected to the rotor (6) and comprising entrainment means (11) for entraining the gas within the inlet shaft (9) in the direction of rotation of the rotor.

2. A centrifugal separator according to claim 1, wherein the body comprises a tubular wall (12) which radially surrounds the inlet shaft (9) and said entrainment means (11) and has running through it a plurality of apertures (13) through which the inlet shaft (9) communicates with the intermediate spaces (8) between the separation discs (7).

3. A centrifugal separator according to claim 2, wherein said apertures (13) together take up at least a major portion of the surface of the tubular wall.

4. A centrifugal separator according to claim 2 or 3, wherein each separation disc (7) comprises a radially inner edge with at least one recess, and the tubular wall (12) comprises at least one elongate rib (14) extending radially outwards from and axially along the outside of the tubular wall and adapted to engaging in the recess in order to provide the separation discs (7) with polar guidance relative to the tubular wall (12).

5. A centrifugal separator according to any one of claims 2 - 4, wherein the tubular wall (12) and the stack of separation discs (7) form between them a transfer shaft (22) for gas, which transfer shaft (22) surrounds and extends axially along the tubular wall (12) so that the inlet shaft (9) communicates with the intermediate spaces (8) between the separation discs (7) via said transfer shaft (22).

6. A centrifugal separator according to any one of claims 2 - 5, wherein the body's tubular wall (12) and entrainment means (11) are integral.

7. A centrifugal separator according to any one of the preceding claims,
wherein the stack of truncated conical separation discs is arranged axially between an upper end disc (15) and a lower end disc (16), wherein the body is integral with one of said end discs (15 or 16).

8. A centrifugal separator according to any one of the preceding claims,
wherein said entrainment means (11) comprise a number of wings (11) distributed around the rotational axis (R) and extending radially and axially in the inlet shaft (9).

9. A centrifugal separator according to claim 8, wherein the number of wings (11) arranged in the inlet shaft (9) ranges from one to ten, preferably two to five, and most preferably three.

10. A centrifugal separator according to claims 2 and 8, wherein the tubular wall (12) surrounds a spindle (18) which supports the rotor (6) for rotation and which extends coaxially with the rotational axis (R) through the inlet shaft (9), and the wings (11) extend radially between the spindle (18) and the tubular wall (12), dividing the inlet shaft (9) into sectors delimited in the circumferential direction by the wings (11).

11. A centrifugal separator according to claim 10, wherein the body (10) comprises a bushing (21) adapted to surrounding the spindle (18), and wherein the wings (11) extend radially between the bushing (21) and the tubular wall (12), which bushing (21) is integral with the tubular wall (12) via the wings (11).

12. A centrifugal separator according to any one of claims 1 - 7, wherein said entrainment means comprise a disc element (11') extending axially within the inlet shaft (9) in a helical path around the rotational axis (R).

13. A centrifugal separator according to claim 12, wherein the tubular wall (12) surrounds a spindle (18) which supports the rotor (6) for rotation and extends coaxially with the rotational axis (R) through the inlet shaft (9), and the disc element (11') extend radially between the spindle (18) and the tubular wall (12)

14. A centrifugal separator according to claim 13, wherein the body (10) comprises a bushing (21) adapted to surrounding the spindle (18), and the disc element (11') extends radially between the bushing (21) and the tubular wall (12), which bushing (21) is integral with the tubular wall (12) via the disc element (11').

15. A centrifugal separator according to any one of claims 1 - 7, wherein said entrainment means comprise a stack of annular disc elements arranged coaxially with the rotational axis (R) within the inlet shaft (9) and at mutual spacing such that they delimit between them intermediate spaces for entrainment and throughflow of the gas, which annular discs have a radial extent through a radially outer portion of the inlet shaft (9), thereby constituting in a radially inner portion of the inlet shaft (9) a hollow space for clear axial throughflow of gas.

## Patentansprüche

1. Zentrifugalabscheider (1) für das Entfernen von teilchenförmigen Verunreinigungen aus einem Gas, wobei der Zentrifugalabscheider (1) aufweist:
ein Gehäuse (2), das eine Abscheidungskammer (3) begrenzt und einen Gaseintritt (4) in die Abscheidungskammer (3) und einen Gasaustritt (5) aus der Abscheidungskammer (3) aufweist;
einen Rotor (6), der um eine Rotationsachse (R) in der Abscheidungskammer (3) drehbar ist und einen Stapel von kegelstumpfförmigen Trennscheiben (7) aufweist, die mit einem gegenseitigen Abstand so angeordnet sind, dass sie zwischen sich Zwischenräume (8) begrenzen, damit das Gas hindurchströmen kann;
einen Eintrittsschacht (9), der mittig im Stapel der Trennscheiben (7) angeordnet ist, wobei der Eintrittsschacht (9) mit dem Gaseintritt (4) und den Zwischenräumen (8) zwischen den Trennscheiben (7) in Verbindung steht und ausgebildet ist, um das Gas radial nach außen durch die Zwischenräume (8) zwischen den Trennscheiben (7) zu leiten; und
einen ringförmigen Raum (23) der Abscheidungskammer (3), der den Rotor (6) umgibt, wird radial durch das Gehäuse (2) begrenzt und steht mit den Zwischenräumen (8) zwischen den Trennscheiben (7) und mit dem Gasaustritt (5) in Verbindung,
**gekennzeichnet durch**
einen Körper (10), der innerhalb des Eintrittsschachtes (9) angeordnet ist, wobei der Körper mit dem Rotor (6) verbunden ist und Mitnahmemittel (11) für das Mitreißen des Gases innerhalb des Eintrittsschachtes (9) in der Richtung der Drehung des Rotors aufweist.

2. Zentrifugalabscheider nach Anspruch 1, bei dem der Körper eine rohrförmige Wand (12) aufweist, die den Eintrittsschacht (9) und das Mitnahmemittel (11) radial umgibt und durch die eine Vielzahl von Öffnungen (13) verläuft, durch die der Eintrittsschacht (9) mit den Zwischenräumen (8) zwischen den Trennscheiben (7) in Verbindung steht.

3. Zentrifugalabscheider nach Anspruch 2, bei dem die Öffnungen (13) zusammen mindestens einen Hauptteil der Oberfläche der rohrförmigen Wand einnehmen.

4. Zentrifugalabscheider nach Anspruch 2 oder 3, bei dem eine jede Trennscheibe (7) einen radial inneren Rand mit mindestens einer Aussparung aufweist, und wobei die rohrförmige Wand (12) mindestens eine längliche Rippe (14) aufweist, die sich radial nach außen von und axial längs der Außenseite der rohrförmigen Wand erstreckt und ausgebildet ist, um in der Aussparung in Eingriff zu kommen, um die Trennscheiben (7) mit einer polaren Führung relativ zur rohrförmigen Wand (12) zu versehen.

5. Zentrifugalabscheider nach einem der Ansprüche 2 bis 4, bei dem die rohrförmige Wand (12) und der Stapel der Trennscheiben (7) zwischen sich einen Übertragungsschacht (22) für das Gas bilden, wobei der Übertragungsschacht (22) die rohrförmige Wand (12) umgibt und sich axial längs dieser so erstreckt, dass der Eintrittsschacht (9) mit den Zwischenräumen (8) zwischen den Trennscheiben (7) mittels des Übertragungsschachtes (22) in Verbindung steht.

6. Zentrifugalabscheider nach einem der Ansprüche 2 bis 5, bei dem die rohrförmige Wand (12) des Körpers und das Mitnahmemittel (11) zusammenhängend sind.

7. Zentrifugalabscheider nach einem der vorhergehenden Ansprüche, bei dem der Stapel der kegelstumpfförmigen Trennscheiben axial zwischen einer oberen Endscheibe (15) und einer unteren Endscheibe (16) angeordnet ist, wobei der Körper zusammenhängend mit einer der Endscheiben (15 oder 16) ist.

8. Zentrifugalabscheider nach einem der vorhergehenden Ansprüche, bei dem das Mitnahmemittel (11) eine Anzahl von Flügeln (11) aufweist, die um die Rotationsachse (R) verteilt sind und sich radial und axial im Eintrittsschacht (9) erstrecken.

9. Zentrifugalabscheider nach Anspruch 8, bei dem sich die Anzahl der Flügel (11), die im Eintrittsschacht (9) angeordnet sind, von eins bis zehn bewegt, vorzugsweise zwei bis fünf und am besten drei.

10. Zentrifugalabscheider nach Anspruch 2 und 8, bei dem die rohrförmige Wand (12) eine Spindel (18) umgibt, die den Rotor (6) für eine Drehung trägt, und die sich koaxial mit der Rotationsachse (R) durch den Eintrittsschacht (9) erstreckt, und wobei sich die Flügel (11) radial zwischen der Spindel (18) und der rohrförmigen Wand (12) erstrecken, wobei der Eintrittsschacht (9) in Sektoren unterteilt wird, die in der Umfangsrichtung durch die Flügel (11) begrenzt werden.

11. Zentrifugalabscheider nach Anspruch 10, bei dem der Körper (10) eine Buchse (21) aufweist, die so ausgebildet ist, dass sie die Spindel (18) umgibt, und wobei sich die Flügel (11) radial zwischen der Buchse (21) und der rohrförmigen Wand (12) erstrecken, wobei die Buchse (21) zusammenhängend mit der rohrförmigen Wand (12) mittels der Flügel (11) ist.

12. Zentrifugalabscheider nach einem der Ansprüche 1 bis 7, bei dem das Mitnahmemittel ein Scheibenelement (11') aufweist, das sich axial innerhalb des Eintrittsschachtes (9) in einem schraubenartigen Weg um die Rotationsachse (R) erstreckt.

13. Zentrifugalabscheider nach Anspruch 12, bei dem die rohrförmige Wand (12) eine Spindel (18) umgibt, die den Rotor (6) für eine Drehung trägt und sich koaxial mit der Rotationsachse (R) durch den Eintrittsschacht (9) erstreckt, und wobei sich das Scheibenelement (11') radial zwischen der Spindel (18) und der rohrförmigen Wand (12) erstreckt.

14. Zentrifugalabscheider nach Anspruch 13, bei dem der Körper (10) eine Buchse (21) aufweist, die so ausgebildet ist, dass sie die Spindel (18) umgibt, und wobei sich das Scheibenelement (11') radial zwischen der Buchse (21) und der rohrförmigen Wand (12) erstreckt, wobei die Buchse (21) mit der rohrförmigen Wand (12) mittels des Scheibenelementes (11') zusammenhängend ist.

15. Zentrifugalabscheider nach einem der Ansprüche 1 bis 7, bei dem das Mitnahmemittel einen Stapel von ringförmigen Scheibenelementen aufweist, die koaxial mit der Rotationsachse (R) innerhalb des Eintrittsschachtes (9) und mit einem gegenseitigen Abstand so angeordnet sind, dass sie zwischen sich Zwischenräume für das Mitreißen und den Durchfluss des Gases begrenzen, wobei die ringförmigen Scheiben eine radiale Ausdehnung durch einen radial äußeren Abschnitt des Eintrittsschachtes (9) aufweisen, wodurch in einem radial inneren Abschnitt des Eintrittsschachtes (9) ein hohler Raum für einen freien axialen Durchfluss des Gases gebildet wird.

## Revendications

1. Séparateur centrifuge (1) permettant de retirer des contaminants sous forme de particulaires à partir d'un gaz, ledit séparateur centrifuge (1) comprenant
un carter (2) qui délimite une chambre de séparation (3) et présente une entrée de gaz (4) vers la chambre de séparation (3) et une sortie de gaz (5) à partir de la chambre de séparation (3),
un rotor (6) pouvant tourner autour d'un axe de rotation (R) dans la chambre de séparation (3) et qui comprend un empilement de disques de séparation coniques tronqués (7) agencés selon un espacement mutuel de manière à délimiter entre eux des espaces intermédiaires (8) permettant au gaz de circuler à travers,
un arbre d'entrée (9) qui est fourni de manière centrale dans l'empilement de disques de séparation (7), ledit arbre d'entrée (9) communiquant avec l'entrée de gaz (4) et les espaces intermédiaires (8) entre les disques de séparation (7) et étant conçu pour diriger le gaz radialement vers l'extérieur à travers les espaces intermédiaires (8) entre les disques de séparation (7), et
un espace annulaire (23) de la chambre de séparation (3), qui entoure le rotor (6), est délimité radialement par le carter (2) et communique avec les espaces intermédiaires (8) entre les disques de séparation (7) et avec la sortie de gaz (5),
**caractérisé par**
un corps (10) qui est agencé au sein de l'arbre d'entrée (9), le corps étant raccordé au rotor (6) et comprenant un moyen d'entraînement (11) permettant d'entraîner le gaz au sein de l'arbre d'entrée (9) dans la direction de rotation du rotor.

2. Séparateur centrifuge selon la revendication 1, dans lequel le corps comprend une paroi tubulaire (12) qui entoure radialement l'arbre d'entrée (9) et ledit moyen d'entraînement (11) et présente, passant à travers celle-ci, une pluralité d'ouvertures (13) à travers lesquelles l'arbre d'entrée (9) communique avec les espaces intermédiaires (8) entre les disques de séparation (7).

3. Séparateur centrifuge selon la revendication 2, dans lequel lesdites ouvertures (13) occupent ensemble au moins une partie principale de la surface de la paroi tubulaire.

4. Séparateur centrifuge selon la revendication 2 ou 3, dans lequel chaque disque de séparation (7) comprend un bord radialement intérieur avec au moins un renfoncement, et la paroi tubulaire (12) comprend au moins une nervure allongée (14) s'étendant radialement vers l'extérieur à partir de, et axialement le long de l'extérieur de la paroi tubulaire et conçue pour venir en prise avec le renfoncement afin de fournir aux disques de séparation (7) un guidage polaire par rapport à la paroi tubulaire (12).

5. Séparateur centrifuge selon l'une quelconque des revendications 2 à 4, dans lequel la paroi tubulaire (12) et l'empilement de disques de séparation (7) forment entre eux un arbre de transfert (22) pour du gaz, ledit arbre de transfert (22) entourant, et s'étendant axialement le long de la paroi tubulaire (12) de sorte que l'arbre d'entrée (9) communique avec les espaces intermédiaires (8) entre les disques de séparation (7) par l'intermédiaire dudit arbre de transfert (22).

6. Séparateur centrifuge selon l'une quelconque des revendications 2 à 5, dans lequel la paroi tubulaire (12) de corps et le moyen d'entraînement (11) sont d'un seul tenant.

7. Séparateur centrifuge selon l'une quelconque des revendications précédentes, dans lequel l'empilement de disques de séparation coniques tronqués est agencé de manière axiale entre un disque d'extrémité supérieure (15) et un disque d'extrémité inférieure (16), dans lequel le corps est d'un seul tenant avec l'un desdits disques d'extrémité (15 ou 16).

8. Séparateur centrifuge selon l'une quelconque des revendications précédentes, dans lequel ledit moyen d'entraînement (11) comprend un certain nombre d'ailettes (11) réparties autour de l'axe de rotation (R) et s'étendant de manière radiale et axiale dans l'arbre d'entrée (9).

9. Séparateur centrifuge selon la revendication 8, dans lequel le nombre d'ailettes (11) agencées dans l'arbre d'entrée (9) est compris dans la plage de un à dix, de manière préférée dans la plage de deux à cinq, et est de la manière la plus préférée égal à trois.

10. Séparateur centrifuge selon les revendications 2 et 8, dans lequel la paroi tubulaire (12) entoure une broche (18) qui supporte le rotor (6) en vue d'une rotation et qui s'étend de manière coaxiale à l'axe de rotation (R) à travers l'arbre d'entrée (9), et les ailettes (11) s'étendent radialement entre la broche (18) et la paroi tubulaire (12), en divisant l'arbre d'entrée (9) en secteurs délimités dans la direction circonférentielle par les ailettes (11).

11. Séparateur centrifuge selon la revendication 10, dans lequel le corps (10) comprend une bague (21) conçue pour entourer la broche (18), et dans lequel les ailettes (11) s'étendent radialement entre la bague (21) et la paroi tubulaire (12), ladite bague (21) étant d'un seul tenant avec la paroi tubulaire (12) par l'intermédiaire des ailettes (11).

12. Séparateur centrifuge selon l'une quelconque des revendications 1 à 7, dans lequel ledit moyen d'entraînement comprend un élément de disque (11') s'étendant de manière axiale au sein de l'arbre d'entrée (9) selon un trajet hélicoïdal autour de l'axe de rotation (R).

13. Séparateur centrifuge selon la revendication 12, dans lequel la paroi tubulaire (12) entoure une broche (18) qui supporte le rotor (6) en vue d'une rotation et s'étend de manière coaxiale à l'axe de rotation (R) à travers l'arbre d'entrée (9), et l'élément de disque (11') s'étend radialement entre la broche (18) et la paroi tubulaire (12).

14. Séparateur centrifuge selon la revendication 13, dans lequel le corps (10) comprend une bague (21) conçue pour entourer la broche (18), et l'élément de disque (11') s'étend radialement entre la bague (21) et la paroi tubulaire (12), ladite bague (21) étant d'un seul tenant avec la paroi tubulaire (12) par l'intermédiaire de l'élément de disque (11').

15. Séparateur centrifuge selon l'une quelconque des revendications 1 à 7, dans lequel ledit moyen d'entraînement comprend un empilement d'éléments de disques annulaires agencés de manière coaxiale à l'axe de rotation (R) au sein de l'arbre d'entrée (9) et selon un espacement mutuel de sorte qu'ils délimitent entre eux des espaces intermédiaires en vue d'un entraînement et d'une circulation du gaz, lesdits disques annulaires présentant une extension radiale à travers une partie radialement extérieure de l'arbre d'entrée (9), constituant ainsi un espace creux dans une partie radialement intérieure de l'arbre d'entrée (9) en vue d'une circulation axiale parfaite du gaz.
